# EUROPEAN PATENT SPECIFICATION

(11) **EP 1 293 324 B1**
(45) Date of publication and mention of the grant of the patent: **24.11.2004**
(21) Application number: 02020505.0
(22) Date of filing: 12.09.2002
(51) Int. Cl.: B29C 45/24

(54) **Filter for injection moulding machine**
Filter für Spritzgiessmaschine
Filtre pour presse à injecter

(30) Priority: 12.09.2001 JP 2001277030
(43) Date of publication of application: 19.03.2003
(73) Proprietor: Fuji Photo Film Co., Ltd., Kanagawa (JP)
(72) Inventor: Suehara, Kazuyoshi, Minami.ashigara-shi, Kanagawa (JP); Tominaga, Yoshihiro, Minami-ashigara-shi, Kanagawa (JP); Iwazaki, Nobuyuki, Minami-ashigara-shi, Kanagawa (JP)
(74) Representative: Grünecker, Kinkeldey, Stockmair & Schwanhäusser Anwaltssozietät

(56) References cited:
- US-A- 3 767 056
- "SIEBEINSATZ FUER VERSCHLUSSDUESEN" , KUNSTSTOFFE, CARL HANSER VERLAG. MUNCHEN, DE, VOL. 88, NR. 6, PAGE(S) 799 XP000766379 ISSN: 0023-5563 * the whole document *
- PATENT ABSTRACTS OF JAPAN vol. 1998, no. 13, 30 November 1998 (1998-11-30) & JP 10 217281 A (TOYO SEIKAN KAISHA LTD), 18 August 1998 (1998-08-18)
- ROSSBACH R: "SCHMELZEFILTER FUR DEN SPRITZGIESSER MELT FILTERS FOR INJECTION MOULDERS" , KUNSTSTOFFE, CARL HANSER VERLAG. MUNCHEN, DE, VOL. 85, NR. 2, PAGE(S) 193-195 XP000487988 ISSN: 0023-5563 * the whole document *

## Description

The present invention relates to a nozzle for an injection molding machine according to the preamble of claim 1.

Such a nozzle is known from US 3,767,056 A, which is considered representing the closest prior art for claim 1. Said document discloses an injection molding filter. The filter consists of a housing comprising a material flow inlet and outlet. The housing comprises a longitudinal bore which communicates with the inlet and outlet. A cylindrical member has a plurality of radially disposed filtration openings. Said cylindrical member is positioned in the longitudinal bore to define first and second concentrically disposed flow passages. Each of the filter holes increases in cross-section to ensure that any particle capable of entering the hole will leave the hole and thereby preclude blocking. US 3 767 056 further discloses change passages means according to the preamble of claim 1.

JP 10217281 A discloses a filter for injection molding. Said document describes an injection nozzle which is attached to a guide cylinder. The disclosed filter comprises a cylindrical part and a plurality of holes. Said holes are suitable for removing foreign materials contained in the melted resin.

"*Siebeinsatz für Verschlussdüsen*", Kunststoffe, Carl Hanser Verlag, München, DE, Vol. 88, Nr. 6, Page 799, discloses a filter suitable for an injection molding machine. Said injection molding machine has a nozzle which is suitable for injecting a molten resin into a mold. Said filter comprises a filter body, which is cylindrically shaped to have first inner cylindrical and outer cylindrical surfaces. Said filter body is disposed in said nozzle. A plurality of holes are formed in said filter body. Said holes are suitable for removing foreign materials contained in said melted resin when said melted resin flows from said first surface to said second surface. The cumulative area of said holes is larger than the minimum size of cross-section of passages of said molten resin.

When a plastic molded article is produced, a pellet of plastic is used. The pellet, even if it is prepared by pelletizing a virgin plastic, often contains foreign material, such as grains of sand, metals, dusts and the like. The foreign materials are usually mixed with the pellet in producing processes of the pellet, a silo for preserving the pellet in a factory of injection molding, a process of conveying the pellet in the factory, apparatuses and processes from the silo to an injection molding machine.

Considering circumstance problems, the plastic which is most likely used as a raw material is often recycled. In recycling the plastic, the used plastic is processed into a recycled pellet or recycled tips. Recently, for the purpose of the energy conservation and the decrease of cost, the amount of a recycled plastic, such as recycled pellets or recycled tips, are acceleratively increased. However, the plastic often obtains foreign material and stains while it is provided in the market as a plastic molded article. Accordingly, when the plastic is reused, cleaning or other processing for removing the foreign materials from a recycled plastic are carried out in a recycling factory.

The foreign materials, if not solid, can be almost perfectly removed. When the solid foreign materials are contained in the recycled plastic, some of the plastic molded articles molded with the injection molding machine becomes inferior. Further, it causes a stuff with the foreign materials in a mold of an injection molding machine and a break of the mold. In this case, a production of the plastic molded articles is stopped, and an efficiency of the production is decreased

In injection molding machine disclosed in Japanese Patentr JP 3140225 and JP 10217281, a filter is included in an injection nozzle in order to remove the foreign materials mixed in a pellet of the plastic before injection molding, especially in a recycled pellet made of a recycled plastic.

However, in the injection molding machine illustrated in JP 3140225, the filter has slits, through which the melted resin passes. In the melted resin there are thin metallic fragments, thin film fragment tender metal wire, tender string-shaped substances and the like as the foreign materials. These foreign materials cannot be removed from the melted resin by the slits of the filter. Further, the foreign materials removed from the melted resin causes to decrease a filtration effect of the filter. In cleaning the filter, the melted resin may be fed in a reverse direction. However, as some of the foreign material caught in the slits, they can be removed only by applying the melted resin under high pressure.

JP 10217281 discloses a filter in which plural holes are formed in a certain pitch. The filter causes a pressure loss in injection molding. In order to decrease the pressure loss, this publication discloses another filter having slits through which the melted resin passes in injection molding. However, it is hard to perfectly remove the foreign material having long shape from the melted resin.

An object of the present invention is to provide a nozzle for injection molding machine, with which foreign materials having long-shaped form can be removed effectively from a melted resin without a pressure loss.

Another object of the present invention is to provide a nozzle for injection molding machine, whose cleaning is carried out easily.

The above and other objects of the invention are achieved by a nozzle for injection molding machine according to claim 1. Preferred embodiments are claimed in the dependent claims. A nozzle of the present invention includes a cylindrical filter body having first and second surfaces and plural small holes formed in the filter body. The filter is disposed in an injection molding machine. When a melting resin is supplied in a mold, the melted resin flows from a first surface to a second surface of the filter body, and thereby the holes removes foreign materials contained in the melted resin. In cleaning the filter for removing the foreign materials caught by the holes, the melted resin flows from the second surface to the first one.

The holes each are circular ones, and has a convergent shape having a smaller size on the first surface than the second surface. A total size of the holes on the second surface is larger than the minimum size of a cross-section of passages of the melted resin.

According to the invention, as the total size of the holes are larger than the minimum size of a cross-section of the passages in the injection molding machine, the pressure loss caused by the filter becomes smaller. Further, as the holes has a convergent shape, the foreign materials are easily removed from the filter without applying high injection pressure in cleaning. Further, as the holes are circular, the long foreign materials in the melted resin are surely captured.

The above objects and advantages of the present invention will become easily understood by one of ordinary skill in the art when the following detailed description would be read in connection with the accompanying drawings.
Figure 1 is a diagrammatic view of a diagrammatic view of an injection molding machine including a filter of the present invention;
Figure 2 is a cross-sectional view of a nozzle in injection molding;
Figure 3 is a perspective view of the filter for injection molding of the present invention;
Figure 4 is a partial cross-sectional view of the filter in FIG. 3; and
Figure 5 is a cross-sectional view of the nozzle in cleaning.

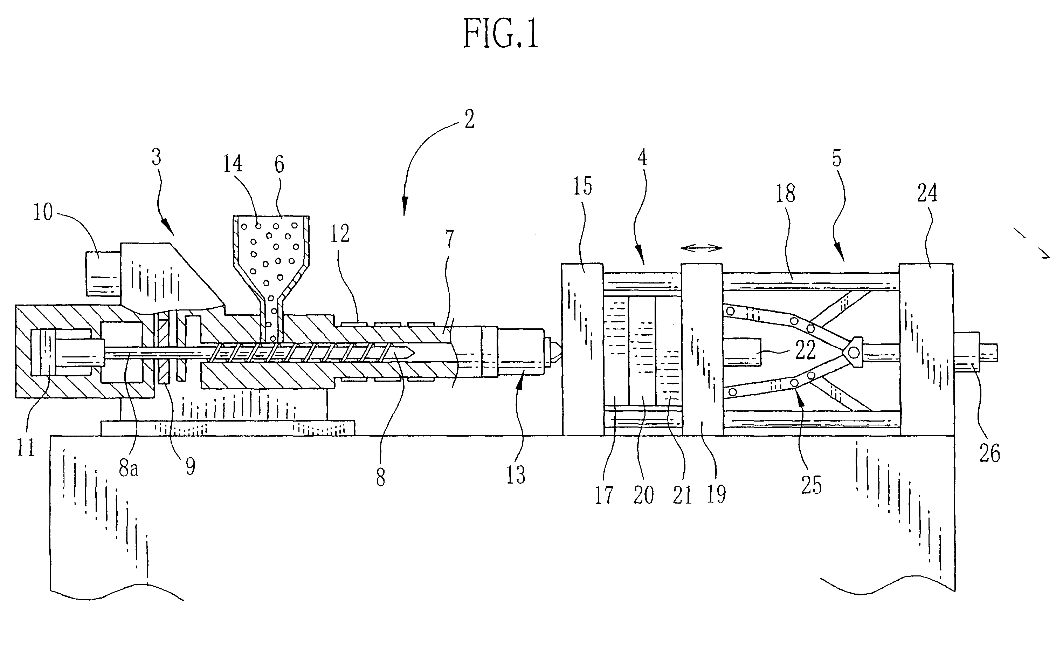

In FIG. 1, an injection molding machine 2 is used for injection molding of plastic, and constructed of an injection unit 3, a mold unit 4 and a mold clamping unit 5. The injection unit 3 includes a hopper 6, a heat cylinder 7, a feed screw 8, a speed reduction gear 9, an oil pressure motor 10, an injection cylinder 11, band heater 12 and a nozzle 13. The nozzle 13 is attached to an end of the heat cylinder 7.

In order to carry out injection molding with the injection molding machine 2, a recycled crushed resin 14 is used. As already known, the used plastic articles are withdrawn into a recycling plant. In the recycling plant, a cycle of recycling processes, such as crashing, remove of foreign material, fine crashing, cleaning, drying, remove of metal and the like, is carried out to obtain the crushed resin 14.

The crushed resin 14 is supplied in the hopper 6, and fed from the hopper 6 in the heat cylinder 7. In the heat cylinder 7, a feed screw 8 is inserted. A back end of a shaft 8a of the feed screw 8 is attached to the injection cylinder 11, and on a shaft 8a of the feed screw 8 the speed reduction gear 9 is attached. The speed reduction gear 9 is meshed with the oil pressure motor 10. The oil pressure motor 10 drives the reduction gear 9 to rotate the feed screw 8, and the injection cylinder 11 shifts the feed screw 8 back- and forwardly in the heat cylinder 7.

The band heater 12 is provided around the heat cylinder 7. The band heater 12 generates the heat to melt the crushed resin 14 fed in the heat cylinder 7. Further, the friction of the crushed resin 14 causes to generate the heat, when the feed screw 8 is rotated. Accordingly, the crushed resin 14 is melted into a melted resin 14a in the heat cylinder 7. The melted resin 14a is fed in the nozzle 13 by slide of the feed screw 8 in forward.

The mold unit 4 is constructed of the stationary platen 15, a stationary mold 17, guide rods 18, movable platen 19, a movable mold 20 and a mold support plate 21. The stationary mold 17 is attached to the stationary platen 15, and ends of the guide rods 18 are fixedly fitted in holes (not shown) formed in the stationary platen 15. A surface of the movable platen 19 is provided with a mold support plate 21 which holds to the movable mold 20. Another surface of the movable platen 19 is provided with an ejector cylinder 22 for driving an ejector pin (not shown) to eject the plastic molded article from the movable mold 20.

The mold clamping unit 5 is constructed of a base plate 24, a toggle mechanism 25 and a mold clamping cylinder 26. The base plate 24 has holes (not shown) in which other ends of the guide rods 18 are fixedly fitted. When the mold clamping cylinder 26 is driven, the movable platen 19 is slid through the toggle mechanism 25 along the guide rod 18.

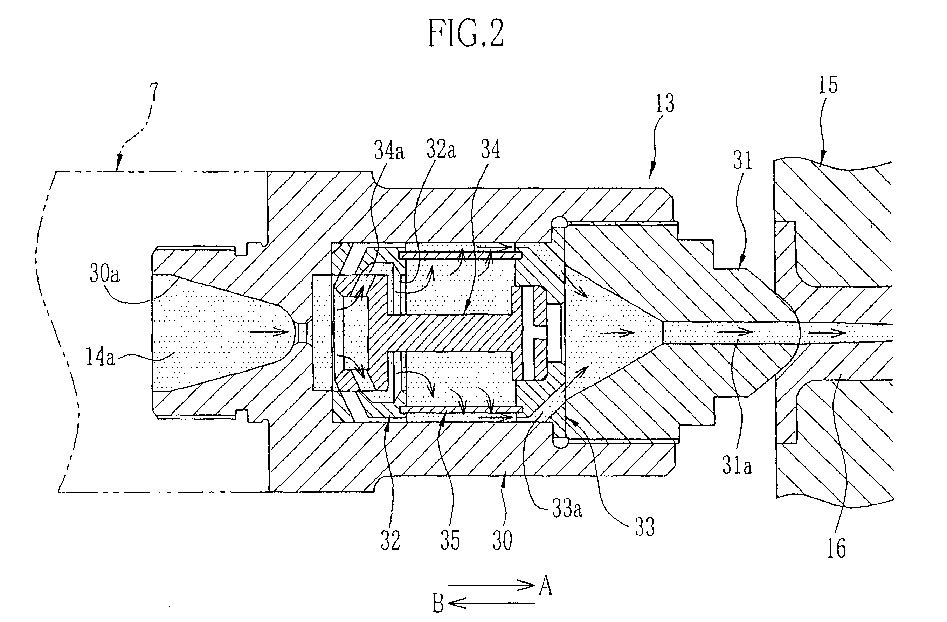

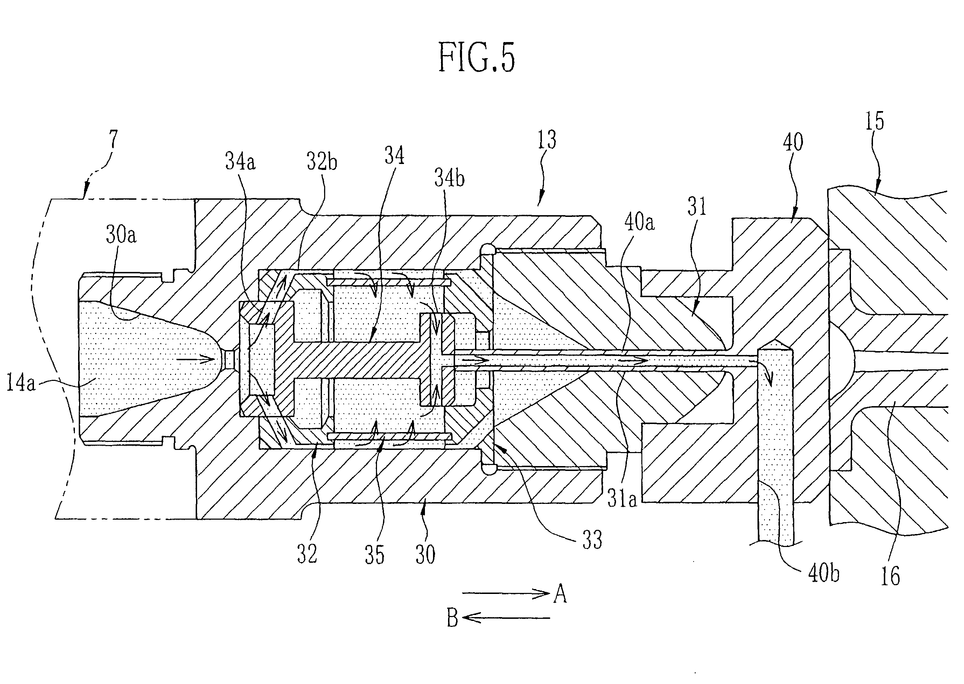

In FIG. 2, the nozzle 13 includes a nozzle case 30, a nozzle head 31, a first cap 32, a second cap 33, a passage changer 34 and a filter 35. The nozzle case 30 is nearly cylindrically shaped and attached to an end of the heat cylinder 7. The nozzle head 31 is attached to an end of the nozzle case 30, and contacted to a spur bush 16 of the mold unit 4 when the melted resin 14a is fed into the mold unit 4. The passage changer 34 shifts in directions A and B between an injection position and a cleaning position (see FIG. 5) to change passages of the melted resin 14a. Further, in the nozzle case 30, the first cap 32 and the second cap 33 are formed a resin entrance 30a, inner passages 32a and outer passages 33b, respectively. Between the first cap 32 and the passage changer 34, there is a first connect passages 34a and a second connect passages 34b. Further, in the nozzle head 31 an injection passage 31a is formed.

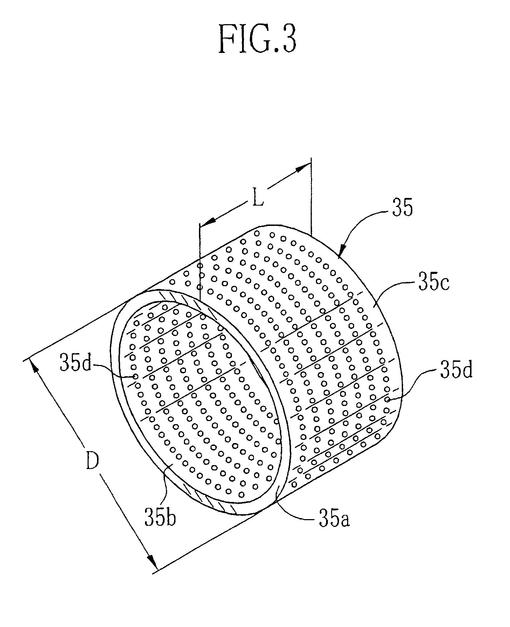

In FIG. 3, the filter 35 includes a filter body 35a formed of a metal plate in a cylindrical shape. The filter body 35a has an inner face 35b and an outer face 35c. For example, a diameter D of the filter 35 is 45 mm, and the length L is 30mm. In the filter body 35a, many small holes 35d are formed. Note that the filter body 35a is made of hyper strong steel in order to obtain pressure-tightness for preventing the break of the injection molding machine 2 in maximum of the pressure applied by a cylinder.

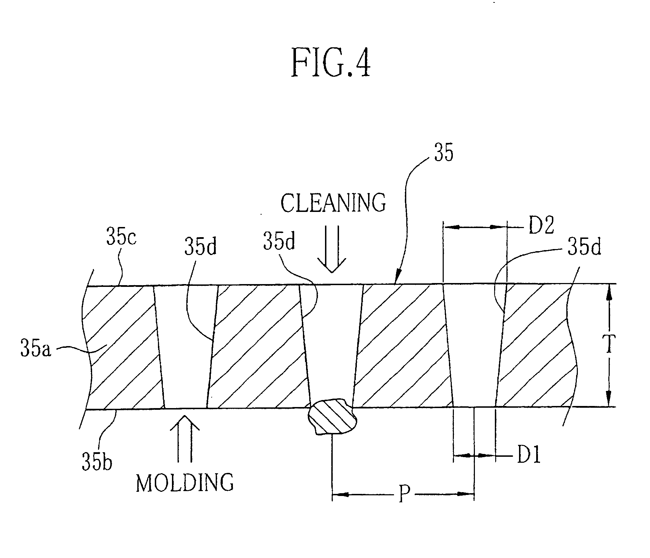

In FIG. 4, a thickness "T" of the filter body 35 is 2mm. The small hole 35d has a taper shape, and a diameter D1 on the outer face 35c is 20 % smaller than a diameter D2 on the inner face 35b. The diameter D2 of the small hole 35d is 0.2 mm, and a ratio of T/D2 is 10. The small holes 35d having this size can surely remove the foreign materials. Further, a hole pitch P is 0.5 mm, which is almost the limitation pitch of forming the small holes 35d. When the small holes having the diameter D2 in 0,2mm is formed at a pitch of 0.5mm in the filter body 35a having the diameter D of 45 mm and the length L of the 30 mm, the number of the small holes 35d is 15414, and the total size thereof is corresponds to a hole having a diameter of 24.8mm. The total size is larger than a minimum size of cross-section of passages of the melted resin 14a in a generally used injection molding machine or mold. Namely, the total size is larger than the cross section of the passage such as the injection passage 31a. Accordingly, considering the resistance in the passages of the filter 35, the pressure loss becomes lower enough.

The small hole 35d is hardly formed in the filter 35 with a machine processing, radiation processing and the like, considering the pitch, the number of holes, the thickness of the filter, the accuracy of forming the holes, time for processing, and the cost. Further, it may be considered to carry out the laser processing for opening the holes. However, as the energy in the laser processing is not so high, much time is necessary therefore. Accordingly, the temperature of a filter becomes higher, which causes to deform the nearest holes.

In the embodiment of the present invention, the small holes 35d are effectively formed in a plate by the electric beam processing in which the energy is high and electric beams may be narrow. Further, in order to form taper-like shaped holes, conditions of processing should be adjusted. After processing the plate is curved to form a cylindrical shape, and both sides thereof are connected.

Operation of the present invention are explained now. In injection molding, the crushed resin 14 is heated to become to the melted resin 14a, and the melted resin 14a flows into the resin entrance 30a of an end of the nozzle case 30. The melted resin 14a in the resin entrance 30a presses the passage changer 34 to slide in the arrowed direction A. Thereby, the first connect passage 34a formed at a back end of the passage changer 34 becomes connected with the inner passage 32a of the first cap 32. The melted resin 14a flowing out from the first cap 32 passes through the small holes 35d to an outside of the filter 35. Thereby, as the foreign materials cannot pass through the small holes 35d, the foreign materials are removed from the melted resin 14a used for injection molding.

After passing through the small holes 35d, the melted resin 14a flows through the outer passage 33a of the second cap 33 into the nozzle head 31. The melted resin 14a in the nozzle head 31 passes through the spur bush 16 and is pressed to enter in the stationary mold 17. As already known, the melted resin 14a fills in a cavity formed by the stationary mold 17 and the movable mold 20 and molded to the plastic molded article.

When the foreign materials are trapped in the filter 35, the pressure loss becomes larger. In order to remove the foreign materials from the filter 35, the cleaning may be carried out. In order to carry out the cleaning of the filter 35, as shown in FIG. 5, a cleaning nozzle 40a of a cleaning plunger 40 is inserted in the injection passage 31a of the nozzle head 31, and the cleaning plunger 40 is pressed onto the stationary platen 15. The cleaning nozzle 40a presses the passage changer 34 to slide toward the heat cylinder 7.

When the passage changer 34 is slid in the arrowed direction B, the first connect passage 34 is connected with the outer passage 32b of the first cap 32. Then, after feeding the melted resin 14a from the heat cylinder 7, the melted resin 14a passes through the outer passage 32b of the first cap 32 to flow into the outside of the filter 35. Then the melted resin 14a passes through the small holes 35d of the filter 35 to flow in the inside of the filter 35. Thereby the foreign material is removed by the flow of the melted resin 14a in the holes 35. Thereafter, the melted resin 14a passes through the second connect passage 34b of the end of the passage changer 34, is fed in the cleaning nozzle 40a of the plunger 40, and fed out from an outlet 40b.

As the cleaning is carried out without disassembling the nozzle 13, the time for removing the foreign materials saves. Further, in order to carry out the cleaning, the cleaning plunger 40 is fitted in the nozzle head 31. Accordingly, the cleaning is made in a simple processing. Furthermore, as each of the small holes 35d is taper-like shaped, the foreign material caught with the small holes 35d, and it is not necessary to apply the high pressure to the crushed resin 14 in injection molding.

In the embodiment above, the filter 35 is used in the injection molding machine for molding from crashed resin. However, the filter 35 is also used in the injection molding machine in which the recycled pellet and the virgin resin are used. In this case, as the filter has an effect to mix the virgin plastic and the recycled plastic, a device for mixing the virgin plastic and the recycled plastic may be omitted. Note that the foreign materials are more effectively removed when the small holes 35d are formed so as to have smaller diameter. However, it is difficult to form the small holes 35d with smaller diameter. Further the cost of producing the filter 35 becomes higher and the pressure loss in injection molding is larger.

Various changes and modifications are possible in the present invention and may be understood to be within the present invention.

## Claims

1. A nozzle for an injection moulding machine, said nozzle having a nozzle case (30), a nozzle head (31), and a filter (35), said nozzle case (30) containing said filter (35), said nozzle head (31) being attached to an end of said nozzle case (30) and being suitable for injecting a molten resin into a mould through an injection passage (31 a), said filter (35) being cylindrically shaped to have first and second surfaces, and plural holes (35d) formed to penetrate from said first surface to said second surface, each of said holes (35d) being a convergent hole the diameter of which is smaller on said first surface than on said second surface, change passages means (32,33,34) provided in said nozzle case (30), wherein said change passages means are suitable for letting said molten resin flow from said first surface of said filter (35) to said second surface for removing foreign materials contained in said molten resin during injection moulding,
said nozzle being **characterized in that**
said change passages means are suitable for letting said molten resin flow from said second surface to said first surface for removing foreign materials blocking up said holes of said first surface side during filter cleaning.

2. A nozzle according to claim 1, wherein said first surface is an inner surface (35b), and said second surface is an outer surface (35c).

3. A nozzle according to claim 2, wherein the total size of said holes (35d) on said outer surface (35c) is larger than a minimum size of sectional area of said injection passage (31 a).

4. A nozzle according to claim 2, wherein said change passages means comprise a first cap (32) disposed on an inlet side of said nozzle case (30), a second cap (33) disposed on an outlet side of said nozzle case (30), said second cap (33) and said first cap (32) support both ends of said filter (35) in a manner that there is a space between said outer surface (35c) of said filter (35) and an inner wall of said nozzle case (30); a passage changer (34) being slidable between a first position and a second position inside of said first cap (32), said second cap (33), and said filter (35), wherein said passage changer (34) is positionable in said first position during said injection moulding, and in said second position during said filter cleaning.

5. A nozzle according to claim 4, wherein said first cap (32) has a first passage (32a) and a second passage (32b), said first passage (32a) being suitable for letting said molten resin flow to said inner surface (35b) of said filter (35), said second passage (32b) being suitable for letting said molten resin flow to said outer surface (35c) of said filter;
said second cap (33) having a third passage (33a) and a centre opening, said third passage (33a) being suitable for letting said molten resin in said space flow to said injection passage (31 a), said centre opening being opposed to said injection passage (31 a);
said passage changer (34) having a fourth passage (34a) communicating to said first passage (32a), a fifth passage (34b) communicating to an inner side of said filter (35), and an outlet opposed said centre opening of said second cap (33) and communicating to said fifth passage (34b);
wherein said passage changer (34) is suitable for being set in said first position by pressure of flowing said molten resin during said injection moulding, and set in said second position by pressing of a cleansing nozzle (40a) inserted into said injection passage (31 a) during said filter cleaning;
in said first position, said second passage (32b) is suitable for being closed by said passage changer (34), and said fifth passage (34b) is suitable for being closed by said second cap (33), said molten resin flowing to said injection passage (31a) through said fourth passage (34a), said first passage (32a), said inner surface (35b) of said filter, said outer surface (35c) of said filter, and said third passage (33a);
in said second position, said molten resin flowing to said outer surface (35c) of said filter through said fourth passage (34a) and said second passage (32b), and a part of molten resin flows to said cleaning nozzle (40a) through said outer surface (35c) of said filter, said inner surface (35b) of said filter, said fifth passage (34b), and said outlet.

## Patentansprüche

1. Düse für eine Spritzgießmaschine, wobei die Düse ein Düsengehäuse (30), einen Düsenkopf (31) und einen Filter (35) besitzt, das Düsengehäuse (30) den Filter (35) enthält, der Düsenkopf (31) an einem Ende des Düsengehäuses (30) angebracht und dazu geeignet ist, ein geschmolzenes Harz durch einen Einspritzkanal (31 a) in eine Gießform einzuspritzen, der Filter (35) zylindrisch geformt ist und eine erste und eine zweite Fläche besitzt, eine Vielzahl Löcher (35d) zum Durchdringen von der ersten zur zweiten Fläche ausgebildet sind und jedes der Löcher (35d) ein konisches Loch ist, dessen Durchmesser an der ersten Fläche kleiner als an der zweiten Fläche ist, eine Kanalwechseleinrichtung (32,33, 34) im Düsengehäuse (30) vorgesehen ist, in dem die Kanalwechseleinrichtung dazu geeignet ist, die Harzschmelze von der ersten Fläche des Filters (35) zur zweiten Fläche strömen zu lassen, um während des Spritzgießens in der Harzschmelze enthaltene Fremdkörper zu entfernen,
wobei die Düse **dadurch gekennzeichnet ist, dass**
die Kanalwechseleinrichtung dazu geeignet ist, Harzschmelze von der zweiten Fläche zur ersten Fläche strömen zu lassen, um Fremdkörper, die die Löcher auf der ersten Fläche verstopfen, während der Filterreinigung zu entfernen.

2. Düse nach Anspruch 1, bei der die erste Fläche eine Innenfläche (35b) und die zweite Fläche eine Außenfläche (35c) ist.

3. Düse nach Anspruch 2, bei der die Gesamtgröße der Löcher (35d) auf der Außenfläche (35c) größer als eine Minimalgröße der Querschnittsfläche des Einspritzkanals (31 a) ist.

4. Düse nach Anspruch 2, bei der die Kanalwechseleinrichtung
eine erste Kappe (32), die an einer Einlassseite des Düsengehäuses (30) angeordnet ist, und eine zweite Kappe (33) umfasst, die an der Auslassseite des Düsengehäuses (30) angeordnet ist, wobei die zweite Kappe (33) und die erste Kappe (32) beide Enden des Filters (35) in einer Weise halten, dass es einen Zwischenraum zwischen der Außenfläche (35c) des Filters (35) und der Innenwand des Düsengehäuses (30) gibt; ein Kanalwechsler (34) ist zwischen einer ersten Stellung und einer zweiten Stellung auf der Innenseite der ersten Kappe (32), der zweiten Kappe (33) und dem Filter (35) verschiebbar, wobei der Kanalwechsler (34) während des Spritzgießens in der ersten Stellung und während der Filtereinigung in der zweiten Stellung platziert werden kann.

5. Düse nach Anspruch 4, bei der die erste Kappe (32) einen ersten Kanal (32a) und einen zweiten Kanal (32b) besitzt, wobei der erste Kanal (32a) dazu geeignet ist, Harzschmelze zu der Innenfläche (35b) des Filters (35) strömen zu lassen und der zweite Kanal (32b) dazu geeignet ist, Harzschmelze zu der Außenfläche (35c) des Filters (35) strömen zu lassen;
die zweite Kappe (33) besitzt einen dritten Kanal (33a) und eine Mittelöffnung,
wobei der dritte Kanal (33a) dazu geeignet ist, Harzschmelze in den Raum zum Einspritzkanal (31a) strömen zu lassen, und die Mittelöffnung dem Einspritzkanal (31 a) gegenüberliegt;
der Kanalwechsler (34) besitzt einen vierten Kanal (34a), der mit dem ersten Kanal (32a) verbunden ist, einen fünften Kanal (34b), der mit einer Innenseite des Filters (35) verbunden ist, und einen Auslass, der der Mittelöffnung der zweiten Kappe (33) gegenüberliegt und mit dem fünften Kanal (34b) in Verbindung ist;
wobei der Kanalwechsler (34) dazu geeignet ist, während des Spritzgießens durch den Strömungsdruck der Harzschmelze in die erste Stellung gebracht zu werden und während der Filterreinigung durch das Drücken einer in den Einspritzkanal (31 a) eingeführten Spülungsdüse (40a) in die zweite Stellung gebracht zu werden;
in der ersten Stellung ist der zweite Kanal (32b) dazu geeignet, durch den Kanalwechsler (34) geschlossen zu werden, und der fünfte Kanal (34b) ist dazu geeignet, durch die zweite Kappe (33) geschlossen zu werden, die Harzschmelze strömt durch den vierten Kanal (34a), durch den ersten Kanal (32a), durch die Innenfläche (35b) des Filters, durch die Außenfläche (35c) des Filters und durch den dritten Kanal (33a) zum Einspritzkanal (31 a);
in der zweiten Stellung strömt die Harzschmelze durch den vierten Kanal (34a) und durch den zweiten Kanal (32b) zur Außenfläche (35c) des Filters, und ein Teil der Harzschmelze strömt durch die Außenfläche (35c) des Filters, durch die Innenfläche (35b) des Filters, durch den fünften Kanal (34b) und durch den Auslass zur Reinigungsdüse (40a).

## Revendications

1. Buse pour une machine de moulage par injection, ladite buse ayant un carter de buse (30), une tête de buse (31) et un filtre (35), ledit carter de buse (30) contenant ledit filtre (35), ladite tête de buse (31) étant fixée à une extrémité dudit carter de buse (30) et convenant pour injecter une résine liquide dans un moule par un passage d'injection (31a), ledit filtre (35) étant de forme cylindrique comportant des première et seconde surfaces, et plusieurs trous (35d) formés pour pénétrer depuis ladite première surface jusqu'à ladite seconde surface, chacun desdits trous (35d) étant un trou convergent dont le diamètre est plus petit sur ladite première surface que sur ladite seconde surface, des moyens de changement de passage (32, 33, 34) disposés dans ledit carter de buse (30), où lesdits moyens de changement de passage conviennent pour laisser ladite résine liquide s'écouler depuis ladite première surface dudit filtre (35) vers ladite seconde surface pour enlever les matériaux étrangers contenus dans ladite résine liquide pendant le moulage par injection.
Ladite buse étant **caractérisée en ce que**
Lesdits moyens de changement de passage conviennent pour laisser la résine liquide s'écouler depuis ladite seconde surface vers ladite première surface pour enlever des matériaux étrangers bloquant lesdits trous de ladite première surface pendant le nettoyage du filtre.

2. Buse selon la revendication 1, dans laquelle ladite première surface est une surface intérieure (35b), et ladite seconde surface est une surface extérieure (35c).

3. Buse selon la revendication 2, dans laquelle la taille totale desdits trous (35d) sur ladite surface extérieure (35c) est plus grande qu'une taille minimale d'une section transversale dudit passage d'injection (31a).

4. Buse selon la revendication 2, dans laquelle lesdits moyens de changement de passage comprennent un premier flasque (32) disposé sur un côté d'entrée dudit carter de buse (30), un second flasque (33) disposé sur un côté de sortie dudit carter de buse (30), ledit second flasque (33) et ledit premier flasque (32) supportent les deux extrémités dudit filtre (35) de telle manière qu'il y a un espace entre ladite surface extérieure (35c) dudit filtre (35) et une paroi intérieure dudit carter de buse (30) ; un changeur de passage (34) pouvant coulisser entre une première position et une seconde position à l'intérieur dudit premier flasque (32), dudit second flasque (33), et dudit filtre (35), où ledit changeur de passage (34) peut être positionné dans ladite première position pendant ledit moulage par injection, et dans ladite seconde position pendant ledit nettoyage du filtre.

5. Buse selon la revendication 4, dans laquelle ledit premier flasque (32) a un premier passage (32a) et un second passage (32b), ledit premier passage (32a) convenant pour laisser ladite résine liquide s'écouler vers ladite surface intérieure (35b) dudit filtre (35), ledit second passage (32b) convenant pour laisser ladite résine liquide s'écouler vers ladite surface extérieure (35c) dudit filtre ;
ledit second flasque (33) ayant un troisième passage (33a) et une ouverture centrale, ledit troisième passage (33a) convenant pour laisser ladite résine liquide dans ledit espace s'écouler vers ledit passage d'injection (31a), ladite ouverture centrale étant opposée au dit passage d'injection (31a) ;
ledit changeur de passage (34) ayant un quatrième passage (34a) communicant avec ledit premier passage (32a), un cinquième passage (34b) communiquant avec un côté intérieur dudit filtre (35), et une sortie opposée à ladite ouverture centrale dudit second flasque (33) et communiquant avec ledit cinquième passage (34b) ;
dans laquelle ledit changeur de passage (34) convient pour être réglé dans ladite première position par la pression d'écoulement de ladite résine liquide pendant ledit moulage par injection, et réglé dans ladite seconde position par la pression d'une buse de nettoyage (40a) insérée dans ledit passage d'injection (31a) pendant ledit nettoyage du filtre ;
dans ladite première position, ledit second passage (32b) convient pour être fermé par ledit changeur de passage (34), et ledit cinquième passage (34b) convient pour être fermé par ledit second flasque (33), ladite résine liquide s'écoulant vers ledit passage d'injection (31a) par ledit quatrième passage (34a), ledit premier passage (32a), ladite surface intérieure (35b) dudit filtre, ladite surface extérieure (35c) dudit filtre, et ledit troisième passage (33a) ;
dans ladite seconde position, ladite résine liquide s'écoulant vers ladite surface extérieure (35c) dudit filtre par ledit quatrième passage (34a) et ledit second passage (32b), et une partie de la résine liquide s'écoule vers ladite buse de nettoyage (40a) par ladite surface extérieure (35c) dudit filtre, ladite surface intérieure (35b) dudit filtre, ledit cinquième passage (34b), et ladite sortie.
